# Europäisches Patentamt

## European Patent Office

## Office européen des brevets

(19)

(11) Veröffentlichungsnummer : **0 417 045 B1**

(12) **EUROPÄISCHE PATENTSCHRIFT**

(45) Veröffentlichungstag der Patentschrift :
**05.01.94 Patentblatt 94/01**

(51) Int. Cl.$^5$ : **G01S 13/82,** G06K 7/08,
H04L 27/22

(21) Anmeldenummer : **90810664.4**

(22) Anmeldetag : **03.09.90**

(54) **Datenübermittlungsanlage.**

(30) Priorität : **04.09.89 CH 3195/89**

(43) Veröffentlichungstag der Anmeldung :
**13.03.91 Patentblatt 91/11**

(45) Bekanntmachung des Hinweises auf die
Patenterteilung :
**05.01.94 Patentblatt 94/01**

(84) Benannte Vertragsstaaten :
**CH DE FR GB LI NL**

(56) Entgegenhaltungen :
**WO-A-88/03687**
**FR-A- 2 494 059**
**GB-A- 1 502 273**

(56) Entgegenhaltungen :
**GB-A- 2 164 825**
**US-A- 3 697 881**
**US-A- 4 061 977**
**US-A- 4 087 628**
**US-A- 4 654 658**

(73) Patentinhaber : **DATAMARS SA**
**Via Ponteggia**
**CH-6814 Cadempino-Lugano (CH)**

(72) Erfinder : **Casalegno, Massimo**
**Frankfurter Landstrasse 5**
**D-6370 Oberursel/Ts. (DE)**

(74) Vertreter : **AMMANN PATENTANWAELTE AG**
**BERN**
**Schwarztorstrasse 31**
**CH-3001 Bern (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Datenübermittlungsanlage gemäss Oberbegriff des Anspruchs 1. Derartige Anlagen dienen insbesondere als sogenannte Identifikationssysteme, wobei die Abfrageeinheit den Transponder zur Uebertragung einer codierten Antwort anregt und wobei der Antwortcode in der Abfrageeinheit ausgewertet wird, um die Identität der Antworteinheit bzw. eines der Antworteinheit zugeordneten Objekts oder die Echtheit oder Berechtigung dieses Objekts bzw. einer Person festzustellen. Zwischen der Abfrageeinheit und dem Transponder besteht normalerweise eine drahtlose Verbindung, wobei als Antennen Hochfrequenzspulen vorgesehen sind, welche je zugleich als Sende- und Empfangsantennen dienen. Vorzugsweise erfolgt die Uebertragung der Daten mittels eines phasenmodulierten Hochfrequenzsignals, um eine möglichst störungsarme Uebertragung zu erzielen.

Die GB-A-2,164,825 beschreibt ein Identifikationssystem der oben beschriebenen Art. Die Sendefrequenz der Abfrageeinheit wird im Transponder durch zwei geteilt, und die Antwort wird mit der halben Sendefrequenz an die Abfrageeinheit übermittelt. Auch im Abfragegerät wird die Sendefrequenz durch zwei geteilt, und diese halbe Sendefrequenz wird einem Phasendemodulator als Referenzfrequenz zugeführt. Es ergeben sich unter diesen Umständen nur unbedeutende Probleme hinsichtlich der Phasenlage dieser Referenzfrequenz und des Antwortsignals, da die Phasenlage der nichtmodulierten Signale entweder 0 oder 180° beträgt. Es ist jedoch erwünscht, einen grösseren Abstand zwischen den beiden Uebermittlungsfrequenzen zu wählen, d.h. diese Frequenzen sollten sich vorzugsweise um einen Faktor in der Grössenordnung von 4 bis 10 unterscheiden. Unter diesen Umständen besteht keine eindeutige Phasenlage mehr zwischen dem Referenzsignal und dem Antwortsignal, was zu besonderen Problemen führt. Im übrigen arbeitet das bekannte System mit je zwei Spulen, was zwar erlaubt, mit einem Teilverhältnis von 2 zu arbeiten, aber eine Miniaturisierung unmöglich macht.

Das englische Patent GB-1 502 273 beschreibt ein System, in dem mindestens drei Phasendemodulatoren parallel das phasenmodulierte Signal zugeführt wird. Für die Demodulation erhalten sie ein um einen konstanten Winkel verschobenes Referenzsignal. Im Fall von drei Demodulatoren sind diese Winkel 0°, 60° und 120° Grad. Im Normalfall werden dann zwei der drei Demodulatoren korrekte Daten liefern, und es genügt ein Vergleich, welche Demodulatoren übereinstimmende Daten liefern, um die korrekt demodulierende Einheit zu bestimmen.

Einen Demodulator, der unabhängig von der Phasenlage des Eingangssignal arbeitet, ist in der französischen Patentanmeldung FR-2 494 059 angegeben. Dieser Demodulator multipliziert zunächst eine interne Referenz auf zwei Arten mit dem Eingangssignal, einmal mit 0°-Phase und einmal mit 90°-Phase. Die Ausgangssignale durchlaufen mehrere Verarbeitungsstufen mit Multiplikatoren, Addierern und Tiefpässen, wonach das demodulierte Signal zur Verfügung steht. Der komplexe Aufbau führt einerseits zu hohen Kosten und beeinflusst andererseits das Einschwingverhalten und die Stabilität negativ.

Ziel vorliegender Erfindung ist es nun, bei einem beliebigen Verhältnis zwischen der Abfragefrequenz und der Antwortfrequenz eine Demodulation praktisch ohne Zeitverlust zu erzielen. Unnötiger Zeitverlust ist aus zwei Gründen zu vermeiden. Die zugelassenen Uebertragungsfrequenzen müssen unter 150 kHz liegen, so dass die Antwortfrequenz recht niedrig gewählt werden muss. Daraus ergibt sich wegen der geringen verfügbaren Bandbreite und des hohen Rauschpegels eine beschränkte Uebertragungsgeschwindigkeit. Im übrigen ist in den meisten Fällen die im Transponder verfügbare Energie begrenzt, sei es dass diese Energie aus dem Abfragesignal gewonnen wird, sei es dass der Transponder aus relativ kleinen Batterien gespeist werden muss, da es sich normalerweise um ein miniaturisiertes Objekt handelt. Die erfindungsgemässe Lösung der gestellten Aufgabe ist im Kennzeichen des Anspruchs 1 umschrieben.

Die Erfindung wird nun anhand eines Ausführungsbeispiels näher erläutert.

Fig. 1     zeigt ein Blockschema des Ausführungsbeispieles,

Fig. 2     zeigt ein weiteres Schaltschema zum Ausführungsbeispiel,

Fig. 3     zeigt schematisch sin- und cos-Werte enthaltende, verschiebbare Tabellen und

Fig. 4     ist ein Diagramm zu einer Variante.

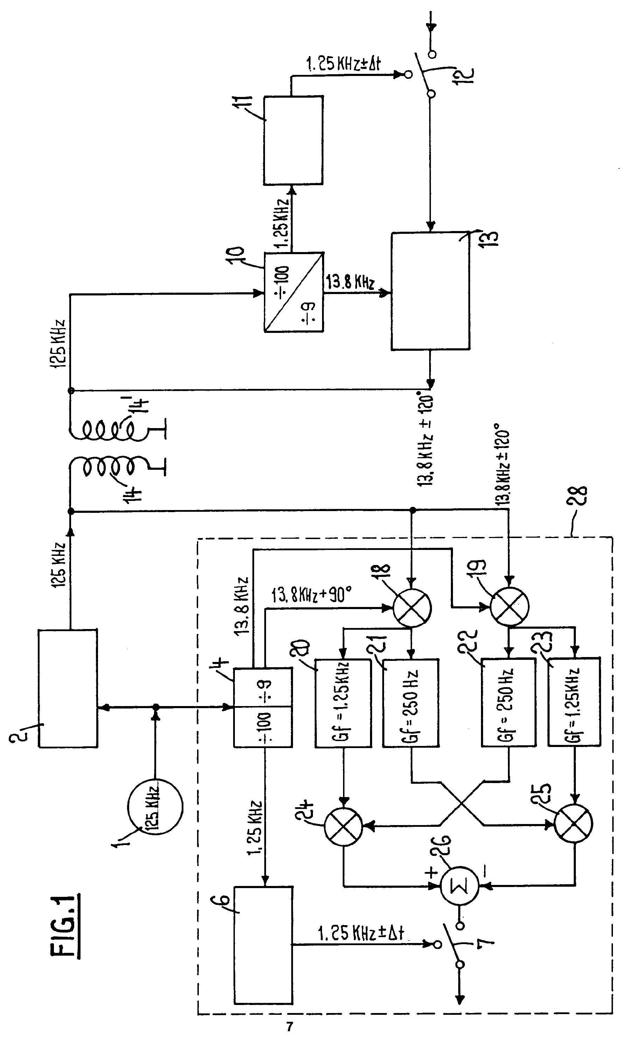

In Fig. 1 ist die Abfrageeinheit links und der Transponder rechts schematisch dargestellt. Die Abfrageeinheit weist einen Oszillator 1 auf. Diese Frequenz wird einem Sender 2 zugeführt. Diese Frequenz weist einen zulässigen Wert von beispielsweise 125 kHz auf. In Fig. 1 sind auch alle übrigen beispielsweise anwendbaren Frequenzen eingetragen.

Der Transponder weist einen Frequenzteiler 10 auf, dem das Abfragesignal des Senders 2 zugeführt wird. Die Verbindung zwischen dem Sender 2 und dem Teiler 10 erfolgt drahtlos über eine Sendespule 14 und eine Empfangsspule 14', wobei die Abfrageeinheit und der Transponder nur je eine Spule 14 bzw. 14' oder andere Antenne aufweisen, die sowohl als Sende- als auch als Empfangsantenne dient. Das Abfragesignal steuert auch einen Sampler 11 an, der ein Schaltglied 12 zur Zuleitung der zu übermittelnden Daten zu einem Phasenmodulator 13 steuert. Die geteilte Ausgangsfrequenz von beispielsweise 13,8 kHz des Teilers 10 wird als Trägerfrequenz dem Modulator 13 zugeführt und wird über denselben Kanal (drahtlose Verbindung) dem Phasendemodulator 18-26 zugeführt.

Die Demodulation in der Abfrageeinheit erfolgt gemäss Fig. 1 mit Hilfe der Formeln für die Achsenrotation:

$$X = + x \cos \mu + y \sin \mu$$
$$Y = - x \sin \mu + y \cos \mu$$

Im vorliegenden Beispiel wird nur das Ergebnis der zweiten Formel errechnet. Dies stellt die Projektion des phasenmodulierten Signals auf die rotierte imaginäre Achse d.h. die vom Signal getragene Modulation dar. Der Frequenzteiler 4 teilt nicht nur die Oszillatorfrequenz, sondern liefert an seinen beiden Ausgängen um 90° phasenverschobene Sinus- bzw. Cosinussignale. Diese beiden Signale werden je einem Eingang eines Multiplikators 18 bzw. 19 zugeführt. Den zweiten Eingängen dieser Multiplikatoren wird das Antwortsignal vom Modulator 13 der Antworteinheit zugeführt. Mit dem Ausgang jedes Multiplikators 18 bzw. 19 sind wiederum zwei verschieden bemessene Tiefpassfilter 20 und 21 bzw. 23 und 24 verbunden, wobei je eines dieser Tiefpassfilter eine höhere und eines eine niedrigere Grenzfrequenz aufweist. Die Ausgänge je eines Paars von Tiefpassfiltern sind mit den Eingängen je eines Multiplikators 24 bzw. 25 verbunden, wobei von jedem Paar je ein Tiefpassfilter mit niedriger Grenzfrequenz einem Multiplikator 18 oder 19 zugeordnet ist und ein Tiefpassfilter mit höherer Grenzfrequenz dem anderen Multiplikator 18 oder 19 zugeordnet ist. Die Ausgänge der Multiplikatoren 24 und 25 sind mit Eingängen einer Subtraktionsschaltung 26 verbunden, welche die Differenz zwischen dem Ausgangssignal des Multiplikators 24 und dem Ausgangssignal des Multiplikators 25 bildet. Es wird damit dank dem in der auf 120° beschränkten Modulation befindlichen Träger ein Signal gemäss der Formel $Y = - x \sin \mu + y \cos \mu$ ermittelt und dem Datenausgang zugeführt. In Fig. 1 ist ein Beispiel angegeben, wie die verschiedenen Frequenzen bzw. Grenzfrequenzen (Gf) gewählt werden können.

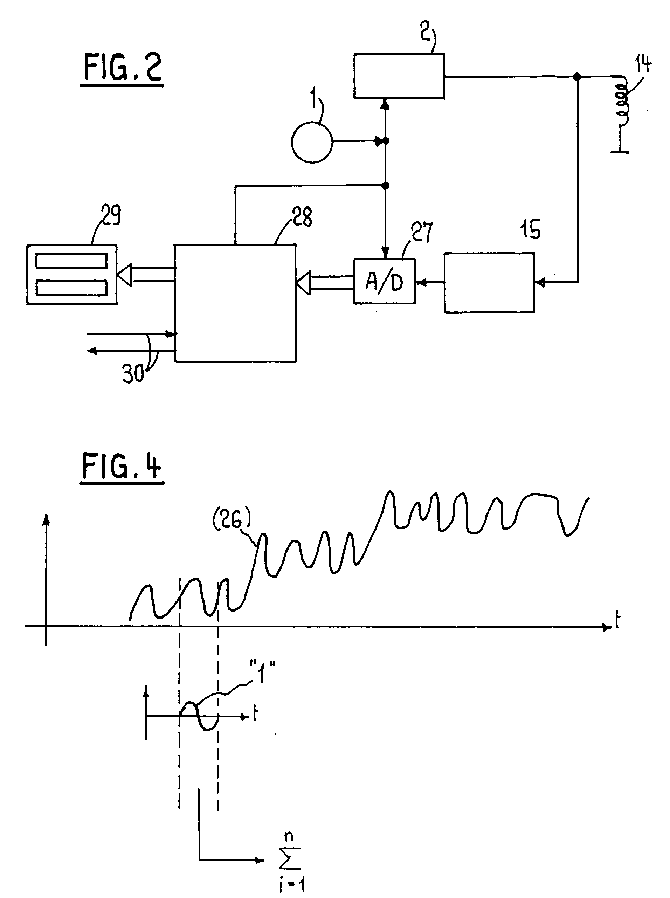

Die Ausführung der Demodulation kann gemäss Fig. 2 mit Hilfe numerischer bzw. digitaler Verfahren realisiert werden. Der Sender 2 ist in diesem Falle mit einer Antenne in Form einer Spule 14 verbunden. Das Antwortsignal wird einem Vorfilter 15 zugeführt, dessen Ausgang einem Analog-Digitalwandler 27 zugeführt wird. Die Ausgänge dieses Wandlers sind mit den Eingängen eines Signalprozessors verbunden, im vorliegenden Fall vom Typ TMS 320 C 25, dem das Ausgangssignal des Oszillators 1 als Taktsignal zugeführt wird. Mit Ausgängen des Prozessors 28 ist eine Anzeigeeinheit 29 verbunden. Es können auch Ausgänge 30 für eine serielle Datenübertragung vorgesehen sein.

Die Multiplikatoren 18 und 19 sind wie folgt realisiert:

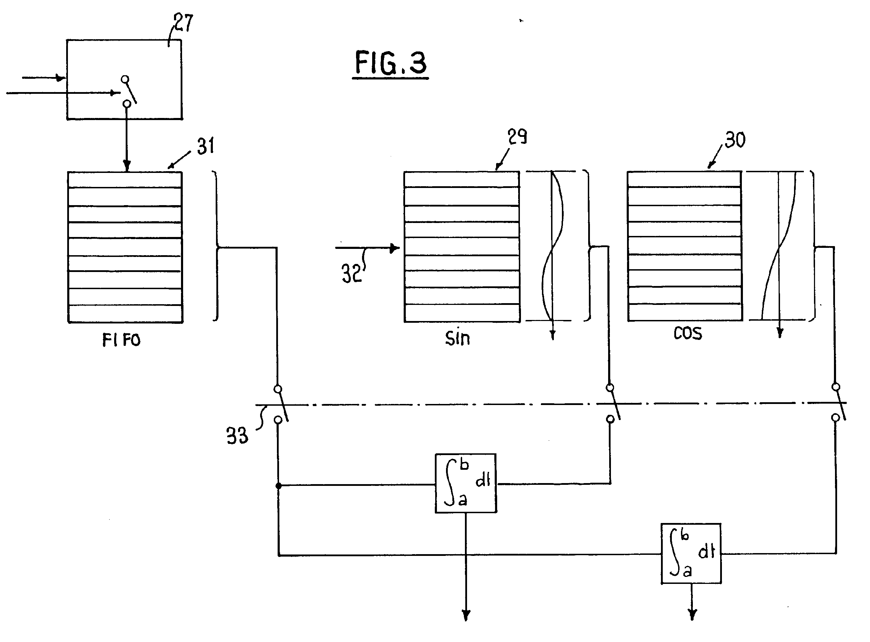

Da die Eingangsabtastrate (27), die zu demodulierende Trägerfrequenz (4) und die Auswertungsabtastrate (6, 7) nicht unbedingt in einem ganzzahligen Verhältnis stehen (z. B. f4/f7 = 11, 1 periodisch), und trotzdem zur Erzielung einer störungsarmen Demodulation hohe Genauigkeit erforderlich ist, wird hier die Multiplikation (18, 19) mit Hilfe von sin- und cos-Werte enthaltenden verschiebbaren Tabellen 29 bzw. 30 erzielt (Fig. 3).

Wie in Fig. 3 dargestellt, wird bei jedem Impuls des Eingangsabtasters 27 ein neuer Wert im FIFO 31 (first in first out) aufgenommen und gleichzeitig der angedeutete Anfangspointer 32 inkrementiert. Bei jedem Impuls des Auswertungsabtasters 33 wird das diskrete Korrelationsintegral:

$$\sum_{i = 1}^{9} FIFO \ (i) \ tab \ (i + Pointer)$$

errechnet, welches praktisch das gewünschte Multiplikationsergebnis ist. Bei der Ausführung dieser Berechnung müssen die sin-/cos-Tabellen als geschlossen betrachtet werden, d. h. nach dem letzten Wert wird der erste verarbeitet. Es ist dabei klar, dass an den Zeitpunkt der Auswertungsabtastung keine Synchronisierungsanforderungen gestellt werden.

Eine weitergehende Verbesserung der Datenerkennung kann durch den Ersatz des Samplers 6, 7 durch ein weiteres Korrelationsverfahren erreicht werden (Fig. 4). Gemäss dieser neuen Vorgehensweise wird ein in einem Festspeicher vorprogrammiertes Muster der Form des Signals für eine ideale "1" bzw. "0", im vorliegenden Fall ein Sinnus-Zyklus wegen der Vorfilterung, mit dem demodulierten Signal korreliert anhand der Formel

$$\sum_{i = 1}^{n} Ausgang \ 26 \ (i + To) \ \ Tabelle \ (i)$$

EP 0 417 045 B1

wobei To der Anfangs-Pointer des auszuwertenden Bits ist.

Wenn das Signal einer "1" ähnlicher ist als einer "0" wird man ein positives, im umgekehrten Fall ein negatives Ergebnis erhalten. Durch Einbauen eines toten Fensters bei der Auswertung des Integralergebnisses wird der Effekt des Rauschens limitiert (idealer Wert = plus/minus 6, wobei 6 die Varianz des Rauschens ist), indem ein ins Fenster fallender Wert als Fehler ausgewertet wird. Dieses Verfahren kompensiert auch wegen unkorrekter Funktion des Transponders eventuell auftretende Phasensprünge (Verlust eines Taktzyklus, distanzbedingt). In Fig. 4 ist mit (26) das Ausgangssignal der Subtraktionsschaltung 26 und mit "1" das Muster für eine ideale "1" bezeichnet.

**Patentansprüche**

1.  Datenübermittlunganlage mit einer als Sender-Empfänger ausgebildeten Abfrageeinheit (1, 2, 4, 6, 7, 18 - 26) und einem als Empfänger-Sender ausgebildeten Transponder (10 - 13), wobei die Datenübermittlung mindestens in einer Richtung mittels eines phasenmodulierten Senders (13) bzw. Phasendemodulators (18 - 26) erfolgt, wobei der Eingang des Phasendemodulators zwei Multiplikatoren aufweist, denen jeweils einerseits das übermittelte phasenmodulierte Signal und andererseits ein Referenzsignal mit einer Phasenlage von 0° bzw. 90° zugeführt wird, das die gleiche Frequenz wie diejenige des Trägers des phasenmodulierten Signals hat, dadurch gekennzeichnet, dass im Phasendemodulator Mittel (4, 18 - 26) vorhanden sind, um Ausgangsignale vom phasenmodulierten Signal dadurch zu gewinnen, dass eine der Achsrotationsformeln

$$X = x \cos \mu + y \sin \mu$$

oder

$$Y = y \cos \mu - x \sin \mu$$

angewandt wird, um das phasenmodulierte Signal um den Winkel $\mu$ in der Phase zu verschieben, wobei $\mu$ betragsmässig gleich der Phasenverschiebung zwischen dem Träger des phasenmodulierten Signals und dem Referenzsignal ist, und dass die Mittel (4, 18 - 26) durch einen digitalen Signalprozessor (28) realisiert sind, der auch die folgenden Schritte zur Ermittlung der Ursprungsdatenfolge übernimmt und die Ursprungsdatenfolge unabhängig von der Phasenlage des phasenmodulierten Signals zurückgewinnt.

2.  Datenübermittlungsanlage nach Anspruch 1, dadurch gekennzeichnet, dass eine Phasenmodulation um 120° erfolgt.

3.  Anlage nach Anspruch 1 oder 2, dadurch gekennzeichnet, dass die Sendefrequenz der Abfrageinheit unabhängig von ihrer Phasenlage im Demodulator rückkopplungsfrei und mit vernachlässigbarer Verzögerung verwertet wird.

4.  Anlage nach Anspruch 3, dadurch gekennzeichnet, dass ein Signalpaar (sin, cos) und das phasenmodulierte Signal je einem Eingangs-Multiplikator (18,19) zugeführt werden, dass der Ausgang jedes Eingangs-Multiplikators (18,19) mit den Eingängen je eines Tiefpassfilters (20, 21; 22, 23) mit unterschiedlichen Grenzfrequenzen verbunden sind, dass die Ausgangssignale jedes Tiefpassfilters (20; 23) mit tieferer Grenzfrequenz mit dem Ausgangssignal des Tiefpassfilters (22, 21) höherer Grenzfrequenz, das mit dem anderen Eingangs-Multiplikator (18 bzw. 19) verbunden ist, mit Hilfe eines Ausgangs-Multiplikators (24, 25) gemischt wird, und dass die so multiplizierten Ausgangssignale addiert oder subtrahiert werden, um die demodulierten Daten zu gewinnen.

5.  Anlage nach Anspruch 4, dadurch gekennzeichnet, dass die Eingangs-Multiplikatoren (18, 19) mit Hilfe von sin- bzw. cos-Wertetabellen asynchron, d. h. unabhängig vom Verhältnis zwischen Eingangs- (4) und Auswertungs-Abtastrate funktionieren.

6.  Anlage nach einem der Ansprüche 1 bis 4, dadurch gekennzeichnet, dass das Sampling und die Auswertung der einzelnen Bits durch diskrete Korrelationsintegrale zwischen dem demodulierten Signal und dem Mustersignal für ein ideales I-Bit bzw. 0-Bit erfolgt.

4

## Claims

1. Device for the transmission of data with an unit of interrogation in form of an emitter-receiver (1,2,4,6,7,18-26) and a transponder (10,13) in form of a receiver-emitter, the transmission of data taking place at least in one direction by means of an emitter for phase modulation (13), resp. a phase demodulator (18-26), the input of the phase demodulator comprising two multiplicators which receive on the one hand the transmited phase modulated signal and on the other hand a reference signal with a phase position of 0°, resp, 90° which has the same frequency than the one of the carrier of the phase modulated signal, characterized in that in the phase demodulator means (4, 18-26) are provided for obtaining output signals from the phase modulated signal, one of the formulas of axis rotation

$$X = x \cos \mu + y \sin \mu$$

or

$$X = y \cos \mu - x \sin \mu$$

being applied for displacing in phase of the angle $\mu$ the phase modulated signal, the amount of $\mu$ being equal to the phase shift between the carrier of the phase modulated signal and the signal of reference, and in that the said means (4, 18-26) are realized by a digital signal processor (28) which executes also the following steps for the detection of the sequence of initial data independently of the phase position of the phase modulated signal.

2. Device according to claim 1, characterized in that a phase modulation of 120° takes place.

3. Device according to claim 1 or 2, characterized in that the emitting frequency of the unit of interrogation is exploited independently of its phase position in the demodulator, without feed back and with a negligible delay.

4. Device according to claim 3, characterized in that a pair of signals (sin, cos) and the phase modulated signal are brought each to an input multiplicator (18,19), in that the output of each input multiplicator (18, 19) is connected to the input of a low pass filter (20, 21, 22, 23) with different cut off frequencies, in that the output signal of each low pass filter (20, 23) with a low cut off frequency is mixed with the output signal of the low pass filter of high cut off frequency provided by the other input multiplicator (18, 19) by means of an output multiplicator (24, 25) and in that the so multiplicated output signals are added or subtracted for obtaining the demodulated data.

5. Device according to claim 4, characterized in that the input multiplicators (18, 19) are working asynchronously by means of tables of values sin, resp. cos, that is independently of the ratio between the sampling rates at the input (4) and the exploitation.

6. Device according to one of the claims 1 to 4 characterized, in that the sampling and the exploitation of the individual bits takes place by discrete integrals of correlation between the demodulated signal and the model signal for a 1, resp. 0 ideal bit.

## Revendications

1. Appareil pour la transmission de données avec une unité d'interrogation sous forme d'émetteur-récepteur (1,2,4,6,7, 18-26) et un transpondeur (10-13) sous forme d'un récepteur-émetteur, la transmission de données ayant lieu au moins dans une direction à l'aide d'un émetteur à modulation de phase (13), resp. un démodulateur de phase (18-26), l'entrée du démodulateur de phase transmis comprenant deux multiplicateurs auxquels est amené d'une part le signal transmis modulé en phase et d'autre part un signal de référence avec une position de phase de 0°, resp. 90° qui a la même fréquence que celle de la porteuse du signal modulé en phase, caractérisé en ce que dans le démodulateur de phase des moyens (4. 18-26) sont présents pour obtenir des signaux de sortie à partir du signal modulé en phase, l'une des formules de rotation d'axes

$$X = x \cos \mu + y \sin \mu$$

ou

$$Y = y \cos \mu - x \sin \mu$$

étant appliquée pour déplacer en phase de l'angle $\mu$ le signal modulé en phase , la grandeur de $\mu$ étant égale au décalage de phase entre la porteuse du signal modulé en phase et du signal de référence, et en ce que les moyens (4, 18-26) sont réalisés par un processeur digital de signal (28) qui execute aussi les étapes suivantes pour la détection de la suite initiale de données, indépendamment de la position de phase du signal modulé en phase.

2. Appareil selon la revendication 1, caractérisé en ce qu'une modulation de phase de 120° prend place.

3. Appareil selon la revendication 1 ou 2, caractérisé en ce que la fréquence d'émission de l'unité d'interrogation est exploitée indépendamment de sa position de phase dans le démodulateur, sans contre-réaction et avec un retard négligeable.

4. Appareil selon la revendication 3, caractérisé en ce qu'une paire de signaux (sin, cos) et le signal modulé en phase sont amenés chacun à un multiplicateur d'entrée (18, 19), en ce que la sortie de chaque multiplicateur d'entrée (18, 19) est connectée à l'entrée d'un filtre passe-bas (20, 21, 22, 23) avec des fréquences de coupure diférentes, en ce que le signal de sortie de chaque filtre passe-bas (20, 23) avec une fréquence de coupure basse est mélangé avec le signal de sortie du filtre passe-bas (22, 21) de fréquence de coupure élevée provenant de l'autre multiplicateur d'entrée (18, 19) à l'aide d'un multiplicateur de sortie (24, 25) et en ce que les signaux de sortie ainsi multipliés sont additionnés ou soustraits pour obtenir les données démodulées.

5. Appareil selon la revendication 4, caractérisé en ce que les multiplicateurs d'entrée (18, 19) fonctionnent à l'aide de tables de valeurs sin, resp. cos asynchrones, c'est-à-dire indépendamment du rapport entre les taux de balayage à l'entrée (4) et à l'exploitation.

6. Appareil selon l'une des revendications 1 à 4, caractérisé en ce que l'échantillonnage et l'exploitation des bits individuels se fait par des intégrales de corrélation discrètes entre le signal démodulé et le signal modèle pour un bit 1, resp. 0 idéal.

FIG.1

EP 0 417 045 B1

FIG.2

FIG.4

$$\sum_{i=1}^{n}$$

8

# FIG.3

FIFO

Sin

COS

27

31

29

30

32

33

$\int_a^b dt$

$\int_a^b dt$

EP 0 417 045 B1